(19) Europäisches Patentamt
European Patent Office
Office européen des brevets

(11) **EP 3 059 895 A1**

(12) **EUROPÄISCHE PATENTANMELDUNG**

(43) Veröffentlichungstag:
   **24.08.2016   Patentblatt 2016/34**

(51) Int Cl.:
   *H04L 9/06* (2006.01)      *H04L 9/08* (2006.01)
   *G08B 21/04* (2006.01)      *H04L 9/12* (2006.01)

(21) Anmeldenummer: **16155838.2**

(22) Anmeldetag: **16.02.2016**

(84) Benannte Vertragsstaaten:
   **AL AT BE BG CH CY CZ DE DK EE ES FI FR GB
   GR HR HU IE IS IT LI LT LU LV MC MK MT NL NO
   PL PT RO RS SE SI SK SM TR**
   Benannte Erstreckungsstaaten:
   **BA ME**
   Benannte Validierungsstaaten:
   **MA MD**

(30) Priorität: **17.02.2015   DE 102015001847**

(71) Anmelder: **EMH metering GmbH & Co. KG
   19258 Gallin (DE)**

(72) Erfinder: **Lübeck, Felix
   21614 Buxtehude (DE)**

(74) Vertreter: **Hauck Patentanwaltspartnerschaft
   mbB
   Kaiser-Wilhelm-Straße 79-87
   20355 Hamburg (DE)**

(54) **EINMALVERSCHLÜSSELUNG VON ZÄHLERDATEN**

(57)   Elektrizitätszähler mit einem Messwerk, einer Kommunikationseinrichtung, einer Steuerung und einem nichtflüchtigen Speicher, wobei der Elektrizitätszähler dazu ausgebildet ist, Verrechnungsdaten mit der Kommunikationseinrichtung an eine entfernte Verrechnungsstelle zu übertragen, dadurch gekennzeichnet, dass der nichtflüchtige Speicher zur Speicherung eines Einmalschlüssels ausgebildet ist.

FIG. 1

**Beschreibung**

Es ist bekannt, Zähler mit Kommunikationseinrichtungen auszustatten, um Verbrauchsdaten aus der Ferne auszulesen. Es ist bekannt, die Verbrauchsdaten für die Übermittlung mit kryptographischen Mitteln zu schützen, um Missbrauch zu verhindern.

Dabei werden üblicherweise so genannte "moderne Methoden der Kryptographie" eingesetzt, wobei hier die Moderne ab der 1949 erfolgten Veröffentlichung des Artikel "Communication Theory of Secrecy Systems" von Claude Elwood Shannon gezählt werden soll.

Insbesondere werden Verfahren wie der DES (Data Encryption Standard)-Algorithmus, oder auf die Veröffentlichung des Artikels "New Directions in Cryptography" von Whitfield Diffie und Martin Hellman im Jahr 1976 zurückgehende, asymmetrische Kryptosysteme eingesetzt.

Für diese Verfahren sprechen insbesondere logistische Vorteile. Die verwendeten Schlüssel sind relativ kurz, benötigen deshalb typischerweise nur wenige hundert Byte Speicherplatz. Die Schlüsselverteilung ist insbesondere bei asymmetrischen Verfahren vereinfacht, weil nur öffentliche Schlüssel zu verteilen sind, die ohne Schaden auch in die Hände eines Angreifers gelangen dürfen.

Die dabei verwendeten Algorithmen gelten bisher als sicher. Die asymmetrischen Verfahren beruhen auf der Annahme, dass zur Generierung eines Schlüssels bzw. Schlüsselpaares wenig rechenintensive Operationen ausreichen, wie beispielsweise die Multiplikation zweier Zahlen, dass dagegen zum Brechen der Verschlüsselung derart rechenintensivere Operationen benötigt werden, dass das Brechen zwar theoretisch möglich, aber nicht praktikabel ist.

Dabei wird in der Expertengemeinschaft der Mathematiker die Auffassung vertreten, dass beispielsweise für die Faktorisierung großer Zahlen gegenwärtig und auch zukünftig keine wesentlich effizienteren Verfahren zur Verfügung stünden, weil solche Verfahren angenommener Weise nicht existieren. Da die verwendeten Algorithmen als sicher gelten, gelten allein Fehler in ihrer Implementierung als potentieller Schwachpunkt dieser Verfahren. Die weite Verbreitung dieser Verfahren beruht auf der Annahme, dass die benutzten Implementierungen korrekt sind.

Die Vertraulichkeit der Kommunikation zwischen einem Zähler und einer Abrechnungsstelle auf Basis genannter Verfahren sollte auf dem Territorium eines demokratisch verfassten Rechtsstaates, wie beispielsweise der Bundesrepublik Deutschland, zudem zusätzlich geschützt sein durch die Staatsgewalt, die dem Grunde nach verpflichtet ist, Angriffe auf diese Kommunikation zu ahnden.

Vor dem Hintergrund zunehmender Investitionen in Angriffe auf diese Kommunikation und steigender Rechenleistung bei Angreifern auf diese Kommunikation ist zweifelhaft, ob die genannten modernen Methoden der Kryptographie noch hinreichend sicher sind. Für einen Hersteller von Kommunikationsgeräten mit wirksamer Verschlüsselung ergibt sich deshalb eine schwierige Situation.

Dieser Hersteller muss sicherstellen, dass einer der genannten Algorithmen in einen Programmcode umgesetzt wird, der keinen für kryptographische Angriffe nutzbaren Fehler aufweist. Dabei sind diese Algorithmen derart komplex, dass eine erhebliche Einarbeitung notwendig ist, um eine fehlerfreie von einer fehlerhaften Implementierung zu unterscheiden. Entsprechend aufwändig ist es, den Programmcode vor vorsätzlich durch einen Angreifer eingeschleusten Fehler in der Implementierung zu schützen.

Dieser Hersteller kann auch auf die Expertengemeinschaft der Mathematiker und deren Bewertungen bezüglich der Tauglichkeit von Verfahren zur Verschlüsselung nicht bauen. Er muss grundsätzlich befürchten, dass beispielsweise ein effizientes Verfahren für die Faktorisierung großer Zahlen längst entdeckt ist.

Denn zwar ist die a priori-Wahrscheinlichkeit dafür, dass eine solche Entdeckung zu irgendeinem Zeitpunkt erfolgt, unbekannt und mutmaßlich gering. Jedoch ist die bedingte Wahrscheinlichkeit dafür, dass eine solche Entdeckung unveröffentlicht bleibt, abschätzbar. Denn es ist davon auszugehen, dass Angreifer über ausreichende Mittel verfügen, um von ihnen finanzierte und kontrollierte Forschungen auf diesem Feld zu forcieren. Weiterhin ist davon auszugehen, dass sie über ausreichende Mittel verfügen, um auch einen nicht von Ihnen finanzierten hypothetischen Entdecker eines solchen Verfahrens wirksam zu manipulieren. Der hypothetische Entdecker könnte von der Veröffentlichung seiner Erkenntnisse abgehalten und in die Produktion von Software zum Angriff auf gesicherte Kommunikation eingebunden worden sein.

Aufgabe der vorliegenden Erfindung ist es, einen Zähler für den Transport von Verbrauchsdaten zu einer Verrechnungsstelle über einen unsicheren Datenkanal mit Mitteln zur Verschlüsselung von Verbrauchsdaten auszustatten, die auf einem besonders einfachen Algorithmus beruhen, dessen fehlerfreie Implementierung besonders einfach nachgewiesen werden kann.

Eine weitere Aufgabe der vorliegenden Erfindung ist es, einen Zähler mit Mitteln zur Verschlüsselung von Verbrauchsdaten auszustatten, die auf einem Algorithmus beruhen, dessen informationstheoretische Sicherheit nachgewiesen ist, dessen Sicherheit also nicht auf Annahmen über begrenzte Rechenleistung oder andere Ressourcenbegrenzungen beim Angreifer beruht.

Diese Aufgaben werden gelöst durch den Elektrizitätszähler mit den Merkmalen des Anspruchs 1. Vorteilhafte Ausgestaltungen sind in den Unteransprüchen angegeben.

Unter anderem wird vorgeschlagen, Verbrauchsdaten für den Transport zu einer Verrechnungsstelle über einen unsicheren Datenkanal mit Einmalverschlüsselung zu verschlüsseln und hierfür einen Elektrizitätszähler gemäß Anspruch 1 vorzusehen. Für Einmalverschlüsselung bzw. Einmalschlüssel, im Sprachgebrauch der oben zitierten Schrift von Shannon "Vernam System" genannt, wird im Folgenden die Bezeichnung One-Time-Pad, und die Abkürzung OTP verwendet. Einmalverschlüsselung setzt dabei die Verwendung eines rein zufällig erzeugten Schlüssels voraus, und ist damit klar abzugrenzen von einer synchronen Stromverschlüsselung, bei der aus einem kurzen Schlüssel eine beliebig lange pseudozufällige Zeichenfolge erzeugt wird. Die informationstheoretische Sicherheit von OTP hat Shannon in der oben zitierten Schrift nachgewiesen.

Aus dem Stand der Technik ist eine Verschlüsselung von Verbrauchsdaten mit Einmalverschlüsselung für den Transport zu einer Verrechnungsstelle über einen unsicheren Datenkanal nicht bekannt.

Zwar erwähnt die GB 2492056 A sowohl einen Zähler als auch eine Einmalverschlüsselung, aber eine genauere Analyse zeigt, dass dort Zähler und Einmalverschlüsselung nicht zusammenwirken sollen.

Die GB 2492056 A beschreibt in der Erläuterung zur Figur 3 eine Abschalteinrichtung, die einstückig mit einem Elektrizitätszähler hergestellt ist ("smart electricity meter 90"), die mit einem "usage monitor 80" über ein "power cable 92" verbunden ist und mit diesem kommuniziert und hierfür Einmalverschlüsselung ("Vernam cipher encryption") mit Hilfe von Pseudozufallszahlen "pseudorandom numbers" benutzt und hierfür ein "flash memory 76" vorsieht. Dabei ist zum "smart electricity meter 90" dessen Fähigkeit offenbart, die Energiezufuhr zu Verbrauchern zu unterbrechen. Es ist offenbart, dass Schaltbefehle vom "usage monitor 80" zum "smart electricity meter 90" übertragen werden sollen. In einem anderen Ausführungsbeispiel ist eine Weitverkehrsverbindung zwischen einem "PVR 10" und einem "medical server 54" offenbart, die nicht durch Einmalverschlüsselung geschützt werden soll, sondern durch "sophisticated encryption systems such as AES-128".

Es ist nicht offenbart, dass vom "smart electricity meter 90" gebildete Messwerte für Spannungen, Ströme und Leistungen oder Elektrizität an den "usage monitor 80" übertragen werden sollen. Eine solche Möglichkeit hat der Erfinder vermutlich nicht in Betracht gezogen. Sonst wäre er vermutlich auf den Gedanken gekommen, den Zustand der Tür des Kühlschranks "freezer 120" aus den Daten des "smart electricity meter 90" zu folgern und hierfür nicht einen dezidierten Sensor ("door open sensor 130") vorzusehen. GB 2492056 A beschreibt eine Erfindung, die eine Abschalteinrichtung verwendet, wobei willkürlich eine besondere Herstellweise einer Abschalteinrichtung herausgegriffen wird, ohne dass hierfür irgendwelche spezifischen Vorteile aufgezeigt werden. Die Lehre der GB 2492056 A lässt sich ebenso gut umsetzen mit einer Abschalteinrichtung, die nicht einstückig mit einem Elektrizitätszähler gefertigt ist. Unklar bleibt, inwieweit hier tatsächlich eine Einmalverschlüsselung realisiert werden soll, da die Bezeichnung "pseudorandom numbers" nicht auf einen zufälligen Schlüssel hinweist. Das bedeutet, hier wird ggf. mit dem Aufwand einer Einmalverschlüsselung lediglich der Effekt einer Stromverschlüsselung erzielt.

Aus der Druckschrift DE 10 2011 088 550 A1 ist ein Zugangskontrollsystem mit einem Elektrizitätszähler und einem Handgerät bekannt geworden, bei dem eine Authentifizierung des Handgeräts mithilfe einer Zwei-Wege-Identifizierung erfolgt, wobei ein sogenanntes Einmalpasswort verwendet wird. Nach erfolgreicher Authentifizierung kann das Handgerät auf die unverschlüsselten Verrechnungsdaten zugreifen.

Der Umstand, dass Verbrauchsdaten bisher nicht mit Einmalverschlüsselung verschlüsselt werden, ergibt sich ganz einfach daraus, dass die Einmalverschlüsselung mit dem Aufkommen der modernen Methoden der Kryptographie aus nahezu allen Bereichen der Technik verdrängt wurde. Diese Verdrängung erfolgte Jahrzehnte vor dem Aufkommen von Zählern, die eine Kommunikationseinrichtung zum Transport von Verbrauchsdaten zu einer Verrechnungsstelle aufweisen.

Diese Verdrängung entsprang folgenden logistischen Nachteilen der Einmalverschlüsselung:

- Die verwendeten Schlüssel sind lang, bewirkten hohe Kosten für Speicherplatz.

- Die Schlüsselverteilung war schwierig, erforderte einen gesicherten Kanal und musste vorab erfolgen.

Mit dem Aufkommen des Internets verschärfte sich der zweite logistische Nachteil, denn es entstand ein Bedarf nach einer spontanen, ungeplanten Kommunikation. Wenn ein Anwender spontan einem Link folgen will, kann er im allgemeinen Fall nicht vorab einen Einmalschlüssel mit dem Server getauscht haben, auf dessen Seiten der Link verweist.

Zudem kam nun ein dritter logistischer Nachteil hinzu: Jeder Kommunikationsteilnehmer im Internet möchte mit sehr vielen anderen Kommunikationsteilnehmern kommunizieren können. Daraus folgt, dass pro Kommunikationsteilnehmer je nach dessen Kommunikationsverhalten dutzende, hunderte oder tausende Schlüsselpaare benötigt würden, was offensichtlich ineffizient ist. Dieser dritte logistische Nachteil trat auf den Plan, bevor der technische Fortschritt dazu geführt hat, dass der erste logistische Nachteil durch das Aufkommen preiswerter Flash-Speicher praktisch bedeutungslos geworden ist, und bevor der zweite logistische Nachteil in vielen Anwendungen ebenfalls stark an Bedeutung verloren hat. Dies ist der Fall in Anwendungen, wo der Austausch symmetrischer Schlüssel per Briefpost etabliert wurde. Man kennt solche Preshared Keys beispielsweise von den PIN-Nummern, die für Online-Banking verwendet werden, und die in speziell versiegelten Briefen transportiert werden.

Der dritte logistische Nachteil sorgt dafür, dass Einmalverschlüsselung nur für Nischenanwendungen interessant ist. Allerdings ist aktuell auch in Nischenanwendungen keine Verbreitung von Einmalverschlüsselung zu erkennen. Dahinter mag die allgemeine eingewurzelte technische Fehlvorstellung stehen, dass die Einmalverschlüsselung ein veraltetes Verfahren darstellt.

OTP bedeuten eine Abkehr von den modernen Methoden der Kryptographie, und insbesondere eine Abkehr von deren logistischen Vorteilen, wie kleine Schlüssel und Übertragungsmöglichkeit von öffentlichen Schlüsseln über unsichere Kanäle. Tatsächlich werden diese Vorteile bei Zähleranwendungen überhaupt nicht mehr benötigt.

Bei Zähleranwendungen steht üblicherweise ein sicherer Kanal zur Übertragung des Schlüssels zur Verfügung, denn Zähler werden üblicherweise von einem Handwerker montiert, der ausreichend qualifiziert und vertrauenswürdig sein kann, um einen kryptografischen Schlüssel in Form eines geeigneten Artefaktes zu transportieren. Beispielsweise ein USB-Stick, auf dem eine entsprechende Schlüssel-Datei gespeichert ist, ist für einen solchen Transport geeignet. Sofern jetzt und im Folgenden von einem USB-Stick die Rede ist, kann auch ein beliebiger anderer Wechseldatenträger verwendet werden, insbesondere mit einem Flash-Speicher, zum Beispiel in Form einer Speicherkarte wie einer SD-Karte.

In Fällen, wo vertrauenswürdige Boten nicht beliebig zur Verfügung stehen, können die einer Liefercharge von Zählern zugeordneten kryptografischen Schlüssel auf einem Datenträger transportiert werden, der durch eine geeignet versiegelte Verpackung vor Manipulationen geschützt ist.

Bei Zähleranwendungen ist die Verwendung von kurzen Preshared Keys üblich. Bei G3-PLC wird beispielsweise ein Preshared Key von 128 Bit Länge vorgesehen, siehe "Shared Secret" auf Seite 180 des Dokuments "Narrowband OFDM PLC specifications for G3-PLC networks" von "Octobre 2014".

Während einer möglichen Produktlebensdauer eines Zählers werden typischerweise weniger Daten übertragen, als auf einem zeitgemäßen USB-Stick Platz hätten. Das bedeutet, es ist problemlos möglich, für jedes zu übertragende Datenbit ein Schlüsselbit vorzusehen. Wenn man beispielsweise eine (hoch angesetzte) tägliche Übertragungsmenge von 10 KByte Verbrauchsdaten annimmt und eine Produktlebensdauer von 8 Jahren, dann fallen während der Produktlebensdauer nur rund 30 MByte an Verbrauchsdaten an. Wenn man den Anwendungsfall eines mehrspartenfähigen Zählers annimmt, bei dem Verbrauchsdaten von Gaszählern, Wärmezählern und Wasserzählern mit den Verbrauchsdaten eines Zählers kombiniert werden zu einer täglichen Übertragungsmenge von 100 KByte, und man eine Produktlebensdauer von 25 Jahren annimmt, dann fallen während der Produktlebensdauer weniger als 1 GByte an Verbrauchsdaten an.

Das zuvor über moderne Verschlüsselungsverfahren gesagte kann übertragen werden auf moderne Authentifizierungsverfahren. Es sind bedingungslos sichere Authentifizierungsverfahren bekannt, deren Sicherheit also nicht von Annahmen über begrenzte Rechenleistung oder andere Ressourcenbegrenzungen beim Angreifer beruht, sondern auf Einmalschlüsseln.

In "The History of Information Security: A Comprehensive Handbook", Karl de Leeuw and Jan Bergstra (Editors), published by Elsevier B.V. ist hierzu auf Seite 581 folgendes Beispiel einer polynomialen Hash Funktion angegeben: Der Schlüssel besteht aus zwei n-Bit Worten bezeichnet als K1 und K2. Der Klartext P ist unterteilt in t n-Bit Worte, bezeichnet als P1 bis Pt. Der MAC Wert der aus einem einzigen n-bit Wort besteht, wird durch eine einfache polynomiale Berechnung gebildet:

$$\mathrm{MAC}_{K_1, K_2}(P) = K_1 + \sum_{i=1}^{t} P_i \cdot (K_2)^i$$

Addition und Multiplikation wird jeweils innerhalb der Klasse mit 2n Elementen berechnet. K2 kann wiederholt genutzt werden, K1 stellt einen Einmalschlüssel dar.

Speicherung und Transport geeigneter Einmalschlüssel stellt wie zuvor gezeigt bei Zähleranwendungen nur ein geringes Problem dar. Die Erzeugung geeigneter Einmalschlüssel stellt allerdings für jedwede Anwendung eine Herausforderung dar, denn das Verfahren beruht darauf, dass die Einmalschlüssel absolut zufällig sind. Die Erzeugung geeigneter Schlüssel erfordert geeignete Maßnahmen, geeignete Hardware und Zeit. Das Messwerk eines Zählers, insbesondere eines ElektrizitätsZählers, liefert verrauschte Messwerte und kann deshalb für die Erzeugung von geeigneten Schlüsseln genutzt werden. Diese Fähigkeit ist sowohl bei der Fertigung als auch im Feld nutzbar, wie im Folgenden an Hand einiger bebilderter Ausführungsbeispiele gezeigt wird.

Figur 1 zeigt einen erfindungsgemäßen Elektrizitätszähler 10 in einem vorgesehenen Einsatz.

Figur 2 zeigt eine Vorrichtung zur Produktion eines erfindungsgemäßen Elektrizitätszählers 10.

Figur 3 zeigt ein Ausführungsbeispiel eines Elektrizitätszählers mit entnehmbarem USB-Stick.

Figur 4 zeigt ein weiteres Ausführungsbeispiel mit zwei entnehmbaren USB-Sticks.

Figur 5 zeigt einen Elektrizitätszähler 10, der dazu vorgesehen ist, bei Bedarf einen OTP zu zerstören und einen neuen OTP zu erzeugen

Figur 6 zeigt einen Elektrizitätszähler, ein Gateway und eine Abrechnungsstelle, die dazu ausgebildet sind, eine Folge von OTP-Zeichen unmittelbar nach deren Nutzung zu löschen.

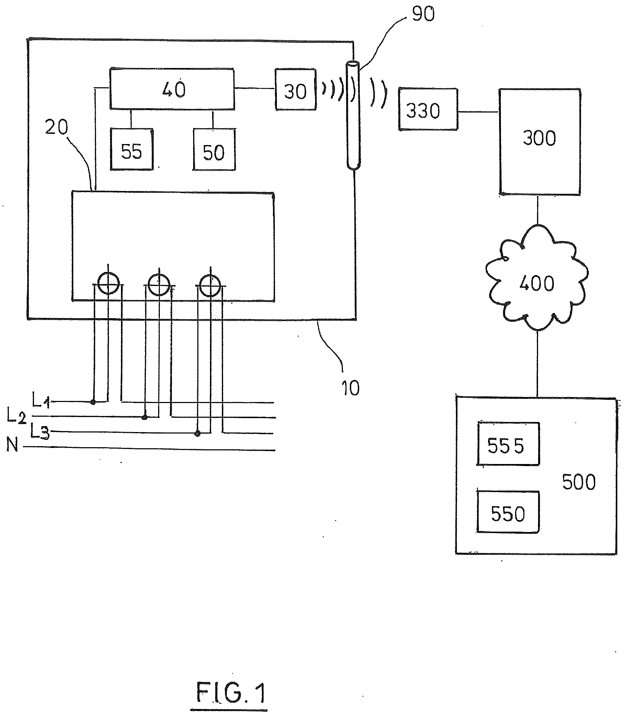

Figur 1 zeigt einen Elektrizitätszähler 10 mit einem Messwerk 20, einer optischen Kommunikationseinrichtung 30 und einer Steuerung 40. Der Elektrizitätszähler ist zwischen einem dreiphasigen Versorgungsnetz und einem Verbrauchsnetz eingeschleift. Dabei ist die dargestellte Trennung von Messwerk und Steuerung logischer Natur und dient zur Veranschaulichung. Das Messwerk ist realisiert durch analoge Schaltkreise, A/D-Wandler und digitale Schaltkreise, wobei sich das Messwerk 20 und die Steuerung 40 gemeinsame Ressourcen, insbesondere einen gemeinsamen Prozessorkern, teilen können.

Die im Messwerk 20 erzeugten Messwerte für Ströme, Spannungen, Leistungen und Elektrizitätsmengen werden an die Steuerung 40 übergeben.

Die Steuerung 40 ist mit einem nichtflüchtigen Speicher 50 verbunden, der einen OTP in Form einer einzigen Datei enthält. Auf diesen Speicher wird im Betrieb ausschließlich lesend zugegriffen. Die Steuerung 40 ist mit einem nichtflüchtigen Speicher 55 verbunden, der Metadaten wie den Zeitpunkt des letzten Verschlüsselungszeitpunktes und insbesondere einen Zeiger auf das erste, noch nicht verwendete Byte der Schlüsseldatei enthält. Bei jeder Verschlüsselung wird dieser Zeiger entsprechend weitergeschoben. Es ist also nicht erforderlich, dass die Länge der zu verschlüsselnden Nachricht jeweils gleich oder vorab bekannt sein muss. Es wird einfach jeweils so viel Schlüssel "verbraucht" wie benötigt wird. Zur Verschlüsselung wird auf das zu verschlüsselnde Byte und das zugeordnete Byte des Schlüssels eine XOR (exklusives Oder) Operation angewendet. XOR stellt für aktuelle CPU eine besonders einfache Methode dar, Klartext mit Schlüssel zu verknüpfen. Eine Addition Modulo 256 wäre eine von vielen möglichen Alternativen. Auf diese Weise verschlüsselt die Steuerung 40 die Verbrauchsdaten, fügt dem Chiffrat ggf. unverschlüsselten Protokolloverhead hinzu, und schickt den resultierenden Datenstrom an die Kommunikationseinrichtung 30. Diese moduliert eine Leuchtdiode mit dem zu sendenden Datenstrom. Das Licht der Leuchtdiode fällt durch ein optisches Fenster 90 auf eine Kommunikationseinrichtung 330, die mit einem Gateway 300 verbunden ist. Das Gateway reicht das Chiffrat über ein Weitverkehrsnetzwerk 400 an eine entfernte Abrechnungsstelle 500 weiter. Die Abrechnungsstelle 500 verfügt über einen nichtflüchtigen Speicher 550, der einen OTP in Form einer einzigen Datei enthält, der mit dem im nichtflüchtigen Speicher 50 gespeicherten OTP übereinstimmt. Die Abrechnungsstelle 500 verfügt zudem über einen nichtflüchtigen Speicher 555, der Metadaten wie den Zeitpunkt des letzten Entschlüsselungszeitpunktes und insbesondere einen Zeiger auf das erste, noch nicht verwendete Byte der Schlüsseldatei enthält. Bei jeder Entschlüsselung wird dieser Zeiger entsprechend weitergeschoben. Zur Entschlüsselung wird auf das zu entschlüsselnde Byte und das zugeordnete Byte des Schlüssels eine XOR Operation angewendet. Sowohl Verschlüsselung als auch Entschlüsselung basieren auf der gleichen, extrem einfachen Operation, deren korrekte Platzierung in einem Programmcode sehr einfach überprüft werden kann. Hier wird deutlich, dass die zweite Aufgabenstellung der Erfindung erfüllt wird. Es ist auch eine verschlüsselte Datenkommunikation in Gegenrichtung vorgesehen. Dazu kann in den nichtflüchtigen Speichern 50 und 550 jeweils eine weitere, unabhängige OTP-Datei vorgesehen sein. Durch die Verwendung zweier getrennter OTP-Dateien werden Probleme vermieden, die entstehen könnten, wenn von beiden Seiten gleichzeitig eine verschlüsselte Übertragung initiiert wird. In diesem Beispiel ist jedoch zur Vereinfachung der Herstellungslogistik nur eine OTP-Datei vorgesehen. Der Zähler entnimmt die von ihm zur Verschlüsselung benötigten Bits jeweils dem Beginn der Datei, und die zur Entschlüsselung benötigten Bits jeweils dem Ende der Datei. Seine Gegenstelle verfährt umgekehrt. Auch so werden Probleme vermieden, die entstehen könnten, wenn von beiden Seiten gleichzeitig eine verschlüsselte Übertragung initiiert wird. Zudem können die in den beiden Richtungen zu übertragenden Datenmengen voneinander abweichen, ohne dass eine a priori Kalkulation benötigt wird, welcher Richtung welcher Prozentsatz der Schlüsselbits zuzuordnen sei. Der OTP wird ggf. komplett verbraucht, bevor die Fähigkeit zur verschlüsselten Übertragung verloren geht.

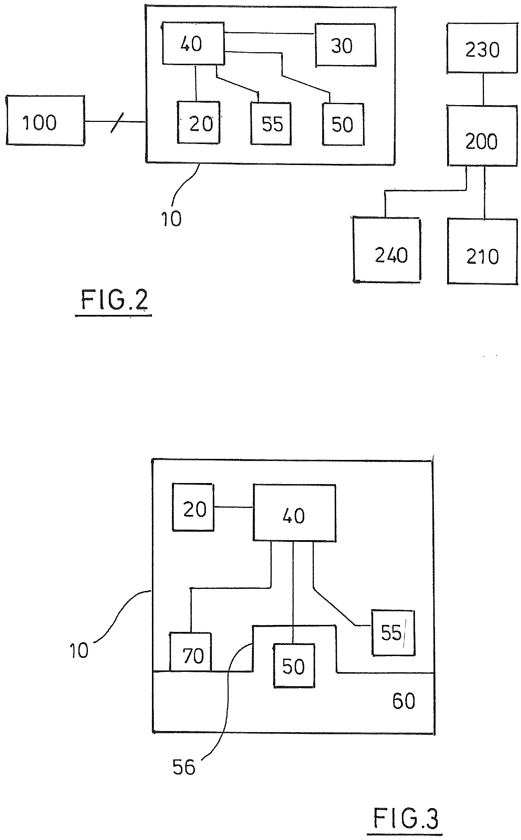

Figur 2 zeigt eine Zählerprüfeinrichtung 100, die mit einem Elektrizitätszähler 10 verbunden ist. Das Messwerk 20 ist so hochauflösend ausgelegt, dass Rohwerte von Messwerten in den niederwertigsten Stellen keine bedeutungstragenden Messdaten repräsentieren, sondern als Ausdruck von Messrauschen zufällig schwanken. Die Steuerung 40 extrahiert aus diesem Messrauschen eine Folge zufälliger Zeichen, die sie sequentiell in eine Datei im nichtflüchtigen Speicher 50 schreibt. Messwerk 20 und Steuerung 40 wirken also zusammen, um einen Hardware-Rauschgenerator zu bilden.

Der Elektrizitätszähler ist dazu ausgebildet, in einem Produktionszustand den Inhalt des nichtflüchtigen Speichers 50 über die Kommunikationseinrichtungen 30 und 230 an einen Fertigungscomputer 200 zu übermitteln. Der Fertigungscomputer 200 speichert die OTP aller für einen Kunden in einer Produktionscharge gefertigten Zähler in einem Speicherbaustein 210. An den Kunden wird gemeinsam mit den Zählern der Speicherbaustein 210 ausgeliefert. Vom Kunden wird der Speicherbaustein 210 zu einer Abrechnungsstelle 500 aus Figur 1 transportiert, und sein Inhalt in den nichtflüchtigen Speicher 550 verschoben.

Die Erzeugung von OTP aus Messrauschen kann parallel zum Abgleich und Prüfprozess erfolgen, so dass sich die Fertigungszeit nicht erhöht. Dabei bestimmen die physikalischen Gegebenheiten des Messwerks und der Anregung, mit welcher Rate zufällige Zeichen erzeugt werden können. Bei Zählern mit niedrig auflösendem Messwert und oder schnellem Abgleich und Prüfprozess kann die Erzeugung der OTP im Zähler die Fertigung ausbremsen. Um dem abzuhelfen kann dann während eines an die Produktion angegliederten Dauertests die Schlüsselerzeugung fortgesetzt werden. Zudem kann der aus Messwerk 20 und Steuerung 40 gebildete Hardware-Rauschgenerator entsprechend der Lehre aus DE 600 04 409 T2 mit einem Pseudozufallszahlengenerator kombiniert werden. Dadurch kann der Hardware-Rauschgenerator mit einer erhöhten Rate betrieben werden, und dabei können trotzdem OTP mit akzeptabler Qualität erzeugt werden. Nebenbemerkung: Ein genauerer Blick auf die DE 600 04 409 T2 belegt das gängige Vorurteil, dass OTP veraltet und in praktischer Hinsicht grundsätzlich unbrauchbar seien. Denn die dort in den Absätzen [0005] - [0008] angegebene Auflistung von Anwendungsfällen übergeht die OTP.

Für Zähler, die nicht mit einer ausreichenden Rate zufällige Zeichen erzeugen können, wird ein externer Zufallszahlengenerator 240 vorgesehen. Ein solcher Zähler, insbesondere auch ein Gas-, Wasser- oder Wärmezähler, ist dazu ausgebildet, in einem Produktionszustand den nichtflüchtigen Speicher 50 über die Kommunikationseinrichtungen 230 und 30 mit einem vom Zufallszahlengenerator 240 erzeugten OTP zu beschreiben.

Figur 3 zeigt ein Ausführungsbeispiel eines Elektrizitätszählers 10 mit einem Messwerk 20, einer Steuerung 40, einem nichtflüchtigen Speicher 50 und einer Aufnahme 56 für diesen nichtflüchtigen Speicher 50. Mindestens eine Kommunikationseinrichtung ist vorgesehen, aber hier nicht dargestellt. Der nichtflüchtige Speicher 50 ist in Form eines USB-Sticks ausgebildet und entnehmbar angeordnet. Der USB-Stick ist unter einem Klemmendeckel 60 angeordnet und im plombierten Zustand des Klemmendeckels 60 nicht erreichbar. Der Montagezustand des Klemmendeckels 60 ist über eine Manipulationserkennung 70 detektierbar.

Die Steuerung 40 ist mit einem nichtflüchtigen Speicher 55 verbunden, der Metadaten wie einen Hashwert über den Inhalt des USB-Sticks enthält. Somit ist ein Zugriff auf den USB-Sticks zwar möglich, aber über die Manipulationserkennung 70 erkennbar. Weiterhin kann die Steuerung 40 ein Abziehen des USB-Sticks über geänderte Pegel der elektrischen Verbindung erkennen. Eine Manipulation des USB-Sticks ist zusätzlich erkennbar am geänderten Hashwert. Bei einem Zugriff und/ oder einer Manipulation des USB-Sticks wird eine unverschlüsselte Alarmmeldung abgesetzt und die Übertragung von Verbrauchsdaten wird ggf. eingestellt.

Der USB-Stick wird bei der Fertigung des Elektrizitätszählers mit einem unfertigen OTP versehen. Das OTP wird erst im Betrieb mit zufälligen Zeichen gefüllt, die mit relativ niedriger Rate aus Messrauschen generiert werden. Der Elektrizitätszähler 10 läuft geraume Zeit unter Probelaufbedingungen, bevor er am Einsatzort installiert wird. Bei der Installation entnimmt der Monteur kurzzeitig den USB-Stick und fertigt eine Kopie seines Inhalts an, die er zu einer Abrechnungsstelle 500 aus Figur 1 transportiert, wo diese in den nichtflüchtigen Speicher 550 verschoben wird. Der in Figur 3 gezeigte Elektrizitätszähler kann alternativ auch dazu vorgesehen werden, erst bei der Installation vom Monteur mit einem geeignet vorgefertigten USB-Stick ausgestattet zu werden, dessen Inhalt bereits in einer Abrechnungsstelle 500 in einem nichtflüchtigen Speicher 550 vorliegt.

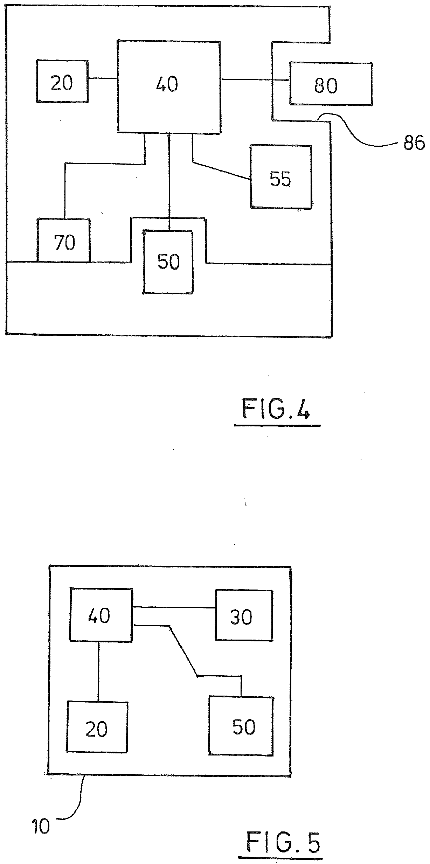

Figur 4 zeigt ein Ausführungsbeispiel, dass gegenüber dem Ausführungsbeispiel aus Figur 3 um einen weiteren Steckplatz 86 für einen weiteren USB-Stick 80 ergänzt ist. Der Steckplatz liegt in einem dem Endkunden zugänglichen Bereich und ist dafür vorgesehen, einen USB-Stick 80 des Endkunden aufzunehmen, und mit zufälligen Zeichen zu füllen. Der Endkunde kann den USB-Stick 80 dann entnehmen, eine Kopie anfertigen und einem Kommunikationspartner übergeben. Er erhält eine Schlüsselqualität, die ansonsten an einem üblichen PC wenn überhaupt, dann nur unter Anwendung spezieller Kenntnisse erzielbar wäre. Die persönliche Schlüsselübergabe ist zwar zunächst etwas umständlich, aber typischerweise nur selten notwendig. Denn ein USB-Stick heute gängiger Größe ist geeignet ausreichend OTP aufzunehmen, um ggf. ein Leben lang vertraulich mit einem Kommunikationspartner kommunizieren zu können.

Figur 5 zeigt einen Elektrizitätszähler 10 mit einem Messwerk 20, einer optischen Kommunikationseinrichtung 30, einer Steuerung 40 und einem internen, nichtflüchtigen Speicher 50. Speicher 50 enthält zwei verschiedene OTP. Zusätzlich zu dem bereits dargestellten ersten OTP in Form einer großen Datei, die dazu vorgesehen ist, sämtliche im Verlauf des Produktlebens zu übertragenden Daten zu schützen, enthält der Speicher 50 einen zweiten OTP in Form einer kleineren Datei, die dazu vorgesehen ist, den ersten OTP bei Bedarf zu zerstören und durch ein neu generiertes OTP zu ersetzen.

Bei der Fertigung des Elektrizitätszählers 10 wird das erste OTP an den Kunden ausgeliefert, der Hersteller behält keine Kopie. Das zweite OTP verbleibt beim Hersteller. Der zweite OTP ist dafür vorgesehen, aus der Ferne die Zerstörung des ersten OTP zu veranlassen. Das zweite OTP weist dazu einen ersten Abschnitt auf, der zur Verschlüsselung und zur Authentifizierung eines Kommandos vorgesehen ist, das die Zerstörung des ersten OTP bewirkt. Bei Empfang dieses Kommandos zerstört der Zähler das erste OTP und begibt sich in einen Neuproduktionszustand, in dem er nur unverschlüsselte Statusmeldungen sendet, und aus Messrauschen ein neues OTP generiert. Jeder Einsatz des zweiten OTP hinterlässt also auffällige Spuren, es wird hierdurch keine Hintertür geschaffen. Nach beispielsweise 1 Tag im Neuproduktionszustand ist ausreichend Entropie aufgelaufen, um rund 100 KByte Zufallszahlen zu produzieren. Ein zweiter Abschnitt des zweiten OTP dient weiterhin dazu, das neuproduzierte OTP für den Transport zu verschlüsseln und zu authentifizieren. Da das zweite OTP aus logistischen Gründen kürzer gewählt ist als das erste OTP, muss das zweite OTP dabei zyklisch wiederholt werden. Diese Abweichung vom Konzept der Einmalverschlüsselung richtet keinen praktischen Schaden an, da das neuproduzierte OTP zufällig ist, was Muster bzw. Angriffspunkte im Chiffrat verhindert.

Das neuproduzierte, für den Transport verschlüsselte OTP kann nun von einem nicht vertrauenswürdigen Boten ausgelesen und an eine Zentrale transportiert werden. Zu dieser Zentrale wird zudem über einen sicheren Kommunikationskanal, wie beispielsweise einen vertrauenswürdigen Boten, das zweite OTP transportiert. Dann werden in dieser Zentrale die Chiffrate des neuproduzierten OTP mit dem zweiten OTP verrechnet, um das neuproduzierte OTP zurückzugewinnen.

Bei Bedarf können diese Schritte auch wiederholt werden. Im zweiten OTP sind beispielsweise jeweils 1024 Bit für die Verschlüsselung und zur Authentifizierung des Zerstörungs-Kommandos vorgesehen, und jeweils 30*1024 Bit für die Verschlüsselung des neuproduzierten OTP und jeweils 1024 Bit für die Authentifizierung des neuproduzierten OTP. Dann sind insgesamt 4 KByte pro Zerstörungs-/Neuproduktionszyklus notwendig. Wenn der Zähler bei der Fertigung mit einem zweiten OTP von 1 MB Länge ausgestattet wird, dann ist er also befähigt, 256 entsprechende Zyklen durchzuführen.

Sollte überhaupt kein Zerstörungs-/Neuproduktionszyklus bewirkt werden, kann der Fall eintreten, dass das erste OTP komplett verbraucht wird, so dass die Fähigkeit zur verschlüsselten Übertragung verloren geht. In diesem Fall begibt sich der Zähler von sich aus in den Neuproduktionszustand. Das bedeutet, der vollständige Verbrauch des OTP bewirkt nicht automatisch eine Unbrauchbarkeit des Produktes. Es ist also nicht notwendig, eine a priori begrenzte Produktlebensdauer zu definieren, und den Zähler mit entsprechend ausreichend großem OTP auszustatten.

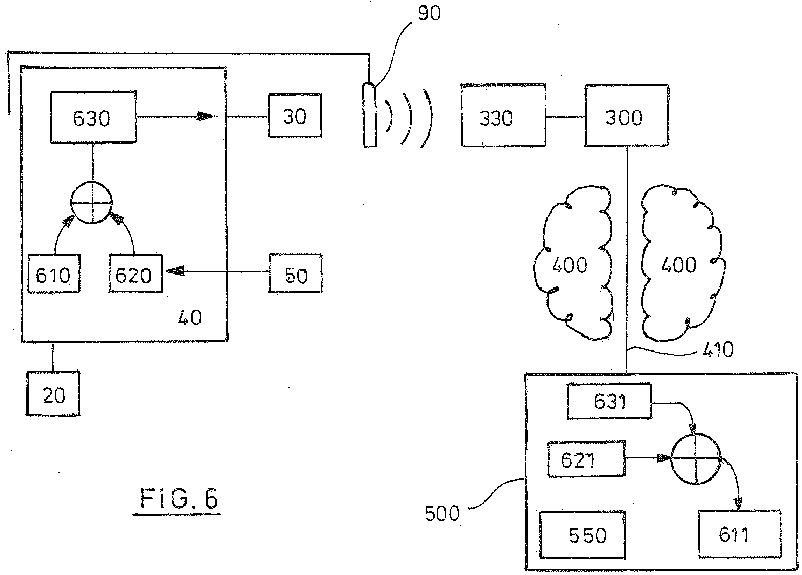

Figur 6 zeigt einen Elektrizitätszähler 10 mit einem Messwerk 20, einer optischen Kommunikationseinrichtung 30, einer Steuerung 40 und einem internen, nichtflüchtigen Speicher 50. Die Steuerung 40 bildet Verrechnungsdaten, die dann temporär in der Steuerung 40 als eine Folge von Klartext-Zeichen 610 vorliegen. Die Steuerung 40 entnimmt dem nichtflüchtigen Speicher 50 eine entsprechend lange Folge von OTP-Zeichen 620 und wendet eine XOR-Verknüpfung an, um eine Folge von Chiffrat-Zeichen 630 zu generieren. Diese Folge von Chiffrat-Zeichen wird an die Kommunikationseinrichtung 30 übergeben. Unmittelbar nach der Nutzung wird die Folge von zufälligen OTP-Zeichen 620 gelöscht. Dadurch kann ein Angreifer die Daten nicht entschlüsseln, indem er sich nachträglich Zugang zum nichtflüchtigen Speicher 50 verschafft.

An die Kommunikationseinrichtung 30 schließt sich, wie bereits im Ausführungsbeispiel aus Figur 1 gezeigt, ein optisches Fenster 90, eine Kommunikationseinrichtung 330, ein Gateway 300, ein Weitverkehrsnetzwerk 400 und eine entfernte Verrechnungsstelle 500 an. Das Gateway 300 und die Verrechnungsstelle 500 sind dazu ausgebildet, eine tcp/ip-Verbindung 410 aufzubauen, die hier als Tunnel durch das Weitverkehrsnetzwerk 400 dargestellt ist.

Diese Geräte weisen einen tcp/ip-Stack auf mit Mechanismen zur Nachforderung verlorener Daten. Das bedeutet, das Gateway 300 puffert gesendete Daten so lange, bis die Gegenstelle deren Empfang quittiert, und umgekehrt. Diese Erläuterung dient lediglich der Klarstellung, dass Einmalverschlüsselung nicht bedeutet, dass die verschlüsselten Daten nur einmal versendet werden dürfen. Tatsächlich ergeben sich aus dem wiederholten Versand keinerlei Probleme. Es sei hier angemerkt, dass die tcp/ip-Übertragung wie auch die OTP auf einer Nummerierung der übertragenen Bytes beruht, und dass sich interessante Spareffekte ergäben, wenn die kryptografischen Funktionen und die Übertragungsfunktionen auf tiefer Ebene miteinander verbunden würden. Hier ist bewusst eine Ausführung gezeigt, die auf eine derartige Integration verzichtet. Dadurch wird die Softwareentwicklung vereinfacht und bekannte tcp/ip-Stacks können übernommen werden.

Die Verrechnungsstelle 500 ist dazu ausgebildet, wie bekannt aus der Folge von Chiffrat-Zeichen 631 und einer Folge OTP-Zeichen 621 die Folge von Klartext-Zeichen 611 zu generieren und unmittelbar nach deren Nutzung die hierfür eingesetzte Folge von OTP-Zeichen zu löschen. Dadurch kann ein Angreifer die Daten nicht entschlüsseln, indem er sich nachträglich Zugang zur Abrechnungsstelle 500 verschafft. Mit "löschen" ist hier jeweils physisches Überschreiben gemeint. Da für den nichtflüchtigen Speicher 550 bevorzugt ein Flashspeicher vorgesehen wird, der nicht beliebig häufig beschrieben werden darf, wird der Löschvorgang so ausgestaltet, dass tatsächlich nur die der eingesetzten Folge von OTP-Zeichen zugeordneten Speicherzellen überschrieben werden. Dazu wird beispielsweise Flash-Speicher in NAND-Technik verwendet, bei dem jeweils ein kompletter Block (eine komplette "Page") gelöscht wird, sobald die durch diesen Block repräsentierte Folge von OTP-Zeichen verbraucht wurde. Dies weicht von verbreiteten Verfahren zum Betreiben von Flashbausteinen ab und stellt ggf. einen deutlichen Zusatzaufwand dar. Doch der Sicherheitsgewinn durch den Löschvorgang ist immens. Ein Angreifer, der vermutet, dass irgendwann irgendwo auf der Welt eine ihn interessierende Nachricht übertragen wird, muss sich vorab Zugang zu jeder potentiellen Datenquelle verschaffen, und in Summe kaum beherrschbare Mengen von Schlüsselmaterial kopieren, um später zu einem Bruch der Verschlüsselung befähigt zu sein. Denn er hat nachträglich keine Option mehr, sich Zugang zum Schlüsselpaar zu verschaffen.

Die vorstehend an Hand von Figuren gezeigten Ausführungsbeispiele stellen jeweils mögliche Fähigkeiten eines erfindungsgemäßen Elektrizitätszählers exemplarisch dar, und sind zum Zweck einer einfachen Nachvollziehbarkeit ausgewählt. Die Integration einer Abschalteinrichtung in einen Zähler mit der Einmalverschlüsselung von Abschaltkommandos ist ebenfalls möglich. Dabei kann die Partei, die berechtigt ist, Abschaltkommandos zu schicken eine andere sein, als die Partei, die berechtigt ist Verrechnungsdaten in einer Verrechnungsstelle 500 zu verarbeiten. Deshalb kann es vorgesehen sein, hierzu unterschiedliche OTP einzusetzen. Die Zusammenhänge sind für einen Fachmann so einfach nachvollziehbar, dass es hierfür keiner Zeichnung bedarf.

Die beschriebenen Fähigkeiten sind kombinierbar. Insbesondere ist es möglich:

- die im Ausführungsbeispiel zu Figur 1 aufgezeigten Realisierungsdetails wie nicht-flüchtiger Speicher 55 für Metadaten mit den anderen Ausführungen zu kombinieren,

- die im Ausführungsbeispiel zu Figur 2 aufgezeigte Rolle eines Elektrizitätszählers bei der Erzeugung von OTP im Produktionsprozess mit den anderen Ausführungen zu kombinieren,

- die im Ausführungsbeispiel zu Figur 3 aufgezeigte Möglichkeit, OTP per USB-Stick zu transportieren, mit den anderen Ausführungen zu kombinieren,

- die im Ausführungsbeispiel zu Figur 4 aufgezeigte Produktion von OTP für den persönlichen Bedarf eines Endkunden mit den anderen Ausführungen zu kombinieren,

- die im Ausführungsbeispiel zu Figur 5 aufgezeigte Möglichkeit, OTP zu ersetzen, mit den anderen Ausführungen zu kombinieren,

- die im Ausführungsbeispiel zu Figur 5 aufgezeigte Möglichkeit, einen ersten OTP mit einem zweiten OTP zu verschlüsseln, mit den anderen Ausführungen zu kombinieren,

- die im Ausführungsbeispiel zu Figur 6 aufgezeigte Möglichkeit, OTP nach dem Gebrauch zu zerstören, mit den anderen Ausführungen zu kombinieren.

Offenkundig sind sämtliche für Elektrizitätszähler dargestellten Möglichkeiten und Vorteile grundsätzlich auch auf andere Zählerarten wie Gas- Wasser- und Wärmezähler übertragbar. Diese sind im Normalfall lediglich bei der Datenrate, mit der Zufallszahlen erzeugt werden können, unterlegen. Deshalb ist es für eine Mehrspartenanwendung vorteilhaft, die Kommunikationseinrichtung im Elektrizitätszähler zu integrieren, und Gas- Wasser- und Wärmezähler mit dem Elektrizitätszähler zu koppeln, so dass der Elektrizitätszähler eine mit Einmalverschlüsselung verschlüsselte Übertragung aller Verrechnungsdaten zu einer Verrechnungsstelle leistet.

Offenkundig sind die mit einem erfindungsgemäßen Zähler erzielbaren Vorteile in Näherung auch dann erzielbar, wenn an Stelle eines echt zufälligen Einmalschlüssels ein schwächerer Einmalschlüssel verwendet wird, dessen Stärke jedoch oberhalb derjenigen liegt, die typischerweise mit Stromverschlüsselung erreicht wird, oder wenn nicht jedes Byte der Verrechnungsdaten mit Einmalverschlüsselung geschützt wird, sondern ein ausreichend hoher Anteil. Derartige Aufweichungen verlassen den Gedanken dieser Erfindung nicht und sollen sinngemäß durch die nachfolgenden Ansprüche mit abgedeckt werden.

Weitere Ausführungsbeispiele sind in den nachfolgenden, nummerierten Absätzen angegeben:

1. Zur Bildung von Verrechnungsdaten ausgelegter Zähler mit einem nichtflüchtigen Speicher 50 und einer Steuerung 40 und einer Kommunikationseinheit 30 zur Übertragung von Verrechnungsdaten zu einer entfernten Verrechnungsstelle 500, dadurch gekennzeichnet, dass der nichtflüchtige Speicher 50 zur Speicherung von mindestens einem Einmalschlüssel vorgesehen ist.

2. Zähler nach Absatz 1, dadurch gekennzeichnet, dass der nichtflüchtige Speicher 50 zur Speicherung von mindestens einem echt zufällig erzeugten Einmalschlüssel vorgesehen ist.

3. Zähler nach Absatz 1 oder 2, dadurch gekennzeichnet, dass vorgesehen ist, aus Messwerten eines Messwerks des Elektrizitätszählers einen Einmalschlüssel zu erzeugen.

4. Zähler nach einem der Absätze 1 bis 3, dadurch gekennzeichnet, dass vorgesehen ist, sämtliche oder die Mehrzahl der für die Übertragung zu einer Verrechnungsstelle 500 vorgesehenen Verrechnungsdaten mit einem Einmalschlüssel zu verschlüsseln.

5. Zähler nach einem der Absätze 1 bis 4, dadurch gekennzeichnet, dass vorgesehen ist, eine Kopie des Einmalschlüssels in der entfernten Verrechnungsstelle 500 vorzuhalten

**Patentansprüche**

1.  Elektrizitätszähler (10) mit einem Messwerk (20), einer Kommunikationseinrichtung (30), einer Steuerung (40) und einem nichtflüchtigen Speicher (50), wobei der Elektrizitätszähler dazu ausgebildet ist, Verrechnungsdaten mit der Kommunikationseinrichtung (30) an eine entfernte Verrechnungsstelle (500) zu übertragen, **dadurch gekennzeichnet, dass** der nichtflüchtige Speicher (50) zur Speicherung eines Einmalschlüssels ausgebildet ist.

2.  Elektrizitätszähler (10) nach Anspruch 1, **dadurch gekennzeichnet, dass** die Steuerung (40) dazu ausgebildet ist, einen in dem nichtflüchtigen Speicher (50) gespeicherten Einmalschlüssel zur Verschlüsselung der Verrechnungsdaten zu verwenden.

3.  Elektrizitätszähler (10) nach Anspruch 1 oder 2, **dadurch gekennzeichnet, dass** die Steuerung (40) dazu ausgebildet ist, zur Verschlüsselung der Verrechnungsdaten auf ein zu verschlüsselndes Byte der Verrechnungsdaten und ein zugeordnetes Byte des Einmalschlüssels eine logische Verknüpfung anzuwenden.

4.  Elektrizitätszähler (10) nach Anspruch 3, **dadurch gekennzeichnet, dass** die logische Verknüpfung eine XOR-Operation ist.

5.  Elektrizitätszähler (10) nach einem der Ansprüche 1 bis 4, **dadurch gekennzeichnet, dass** der Elektrizitätszähler (10) einen weiteren nichtflüchtigen Speicher (55) aufweist und die Steuerung (40) dazu ausgebildet ist, in dem weiteren nichtflüchtigen Speicher (55) einen Zeiger zu speichern, der auf ein erstes, nicht verwendetes Byte des Einmalschlüssels zeigt.

6.  Elektrizitätszähler (10) nach einem der Ansprüche 1 bis 5, **dadurch gekennzeichnet, dass** der Einmalschlüssel echt zufällig ist.

7.  Elektrizitätszähler (10) nach einem der Ansprüche 1 bis 6, **dadurch gekennzeichnet, dass** der Elektrizitätszähler (10) dazu ausgebildet ist, aus Messwerten des Messwerks (20) einen Einmalschlüssel zu erzeugen.

8.  Elektrizitätszähler (10) nach einem der Ansprüche 1 bis 7, **dadurch gekennzeichnet, dass** die Steuerung (40) dazu ausgebildet ist, aus einem von dem Messwerk (20) gemessenen Messrauschen eine Folge zufälliger Zeichen zu extrahieren und in dem nichtflüchtigen Speicher (50) zu speichern.

9.  Elektrizitätszähler (10) nach einem der Ansprüche 1 bis 8, **dadurch gekennzeichnet, dass** der nichtflüchtige Speicher (50) ein entnehmbar in dem Elektrizitätszähler (10) angeordneter Wechseldatenträger ist.

10. Elektrizitätszähler (10) nach Anspruch 9, **dadurch gekennzeichnet, dass** der Wechseldatenträger unter einem plombierbaren Klemmendeckel (60) angeordnet ist.

11. Elektrizitätszähler (10) nach einem der Ansprüche 1 bis 10, **dadurch gekennzeichnet, dass** der Elektrizitätszähler (10) einen Steckplatz für einen Wechseldatenträger in einem für einen Endkunden zugänglichen Bereich aufweist und die Steuerung (40) dazu ausgebildet ist, einen Einmalschlüssel auf einem in den Steckplatz eingesetzten Wechseldatenträger zu speichern.

12. Elektrizitätszähler (10) nach einem der Ansprüche 1 bis 11, **dadurch gekennzeichnet, dass** die Steuerung (40) dazu ausgebildet ist, für eine Verschlüsselung verwendete Abschnitte des Einmalschlüssels unmittelbar nach ihrer Verwendung zu löschen.

13. Elektrizitätszähler (10) nach einem der Ansprüche 1 bis 12, **dadurch gekennzeichnet, dass** der nichtflüchtige Speicher (50) zur Speicherung eines weiteren, von dem Einmalschlüssel verschiedenen Einmalschlüssels ausgebildet ist, wobei der weitere Einmalschlüssel dazu vorgesehen ist, den Einmalschlüssel bei Bedarf zu zerstören.

**14.** System mit einem Elektrizitätszähler (10) nach einem der Ansprüche 1 bis 13 und einer von dem Elektrizitätszähler (10) entfernten Verrechnungsstelle (500), **dadurch gekennzeichnet, dass** in der Verrechnungsstelle (500) eine Kopie des Einmalschlüssels gespeichert ist.

**15.** System nach Anspruch 14, **dadurch gekennzeichnet, dass** die Verrechnungsstelle (500) dazu ausgebildet ist, einen zur Entschlüsselung von Verrechnungsdaten eingesetzten Abschnitt der Kopie des Einmalschlüssels unmittelbar nach seiner Verwendung zu löschen.

FIG.1

FIG.2

FIG.3

FIG.4

FIG.5

FIG. 6

**Europäisches Patentamt**
**European Patent Office**
**Office européen des brevets**

# EUROPÄISCHER RECHERCHENBERICHT

**Nummer der Anmeldung**

EP 16 15 5838

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | GB 2 492 056 A (KELMAN ALISTAIR BRUCE [GB]) 26. Dezember 2012 (2012-12-26) * Zusammenfassung * * Seite 1, Zeile 4 - Seite 9, Zeile 2 * * Abbildungen 1-3 * ----- | 1-15 | INV. H04L9/06 H04L9/08 G08B21/04 H04L9/12 |
| X,P | US 2015/244520 A1 (KARIMAN ALEXANDER V [US] ET AL) 27. August 2015 (2015-08-27) * Zusammenfassung * * Absätze [0001] - [0048] * * Abbildungen 1-8 * ----- | 1-15 | |
| A | MENEZES ET AL: "Handbook of Applied Cryptography, passage", 1. Januar 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 20 - 21,192, XP002347635, ISBN: 978-0-8493-8523-0 * das ganze Dokument * ----- | 1-15 | |

**RECHERCHIERTE SACHGEBIETE (IPC)**

H04L
G08B

Der vorliegende Recherchenbericht wurde für alle Patentansprüche erstellt

| Recherchenort | Abschlußdatum der Recherche | Prüfer |
|---|---|---|
| München | 10. Juni 2016 | Mariggis, Athanasios |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 16 15 5838

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-06-2016

| Im Recherchenbericht angeführtes Patentdokument | Datum der Veröffentlichung | Mitglied(er) der Patentfamilie | Datum der Veröffentlichung |
|---|---|---|---|
| GB 2492056 A | 26-12-2012 | GB 2491946 A<br>GB 2492056 A | 19-12-2012<br>26-12-2012 |
| US 2015244520 A1 | 27-08-2015 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2492056 A
- DE 102011088550 A1
- DE 60004409 T2

**In der Beschreibung aufgeführte Nicht-Patentliteratur**

- **WHITFIELD DIFFIE ; MARTIN HELLMAN.** *New Directions in Cryptography,* 1976
- **SHARED SECRET.** *Narrowband OFDM PLC specifications for G3-PLC networks,* Oktober 2014, 180
- The History of Information Security: A Comprehensive Handbook. Elsevier B.V,